# EUROPEAN PATENT APPLICATION

(11) **EP 2 995 206 A1**
(43) Date of publication of application: **16.03.2016**
(21) Application number: 14184523.0
(22) Date of filing: 12.09.2014
(51) Int. Cl.: A24C 5/35, B65G 47/51

(54) **Conveyor system with channel having nonparallel walls**

(71) Applicant: International Tobacco Machinery Poland Sp. z o.o., 26-600 Radom (PL)
(72) Inventor: Gielniewski, Adam, 26-600 Radom (PL); Owczarek, Radoslaw, 26-600 Radom (PL)
(74) Representative: Markieta, Jaroslaw Franciszek

(57) **Abstract**

A conveyor system comprising a channel (6) for guiding a multi-layer stream (1) of rod-like articles of the tobacco industry received from a conveyor (4) of rod-like articles, whereas the lowermost and uppermost layers (3,5) of rod-like articles in the stream are nonparallel to each other, whereas the channel is adjusted to convey rod-like articles among conveyors situated one above the other and has at least two arch-shaped, inside and outside, walls (7,8) of the guides, whereas in a cross section the walls in the channel guides are nonparallel to each other, and the angle (γ) between the inside walls of the guides of the conveying channel is adjusted depending on the angles (α, β) of inclination of the uppermost layer (5) of rod-like articles relative to the lowermost layer (3) of rod-like articles in the inflowing stream in order to maintain a stable shape of the multi-layer stream of rod-like articles.

## Description

The object of the invention is a conveyor transport system comprising a channel for guiding a multi-layer stream of rod-like articles of the tobacco industry.

The tobacco industry articles in the form of cigarettes, cigarillos, cigars, filter rods are usually conveyed in production lines in the form of a mass flow, i.e. a multi-layer stream of rod-like articles is conveyed within the machines and among the machines The mass flow may be transported by means of belt or chain conveyors situated vertically, horizontally or at any angle. The mass flow may also take place by gravitation in vertical or inclined channels. The methods of designing of systems for conveying a mass flow are known from such documents as GB1175202, GB1453191, GB1519778. There are frequently used conveyor systems, where the mass flow is realized at different levels one below the other, whereas at different levels the stream of article moves in opposite directions such as in the solution disclosed in GB2007179.

From the publication WO2011019291A1 a two-level store is known where the transported rods are conveyed from the lower to the upper level, whereas form the publication WO2008081160A2 a multi-level store is known at the successive levels of which the mass flow moves in successively alternating directions, whereas each level is embodied as a separate circular conveyor. In a multi-layer stream of cigarettes, the lowermost and uppermost layers of cigarettes are nonparallel to each other due to the thickness of the wrapping material connecting the tobacco and filter portions. The filter portions of cigarettes lie on one side of the flow and in case of multiple layers the non-parallelism of the lowermost and uppermost layers is visibly increasing. In addition, this non-parallelism does not constitute a problem when conveying a stream of cigarettes at a single level along a rectilinear conveyor, whereas it may constitute a problem on a circular conveyor. When conveying a stream of cigarettes among successive levels or conveyors situated one above the other, which usually takes place in channels on an arched path using arched guides or conveyors, a problem occurs consisting in that the cigarettes moving in a layer next to the outside walls of the channel are subject to local dislocations and position themselves nonparallel to other cigarettes in the stream.

The objective of this invention is to develop a channel which will allow eliminating the problem of nonparallel positioning of cigarettes.

The substance of the invention is a conveyor system comprising a channel for guiding a multi-layer stream of rod-like articles of the tobacco industry received form the conveyor of rod-like articles, whereas the lowermost and uppermost layers of rod-like articles in the stream are nonparallel to each other. The channel is adjusted to guide rod-like articles among the conveyors situated one above the other and has at least two arch-shaped, inside and outside, walls of the guide. A system according to the invention is characterized in that in a cross section of the channel the walls of the channel guides are nonparallel to one another and the angle γ between the inside walls of the guides of the conveying channel is adjusted depending on the angles α, β on inclination of the uppermost layer of rod-like articles relative to the lowermost layer of rod-like articles in the inflowing stream in order to maintain a stable shape of the multi-layer stream of rod-like articles.

Furthermore, a system according to the invention is characterized in that the angle γ between the inside walls of the guides of the conveying channel is an angle in the range between 3 and 4 degrees, preferably 3.5 degrees.

Furthermore, a system according to the invention is characterized in that the conveying channel is additionally provided with an inlet whose walls, guiding the article stream, are nonparallel to each other by an angle greater than the angle (γ).

The solution according to the invention allows any desired shaping of the channel for guiding the stream of rod-like articles, without the risk of loss of shape of the stream of conveyed rod-like articles.

The object of the invention is presented in embodiments in a drawing in which:
- Fig. 1a: shows a multi-layer stream of rod-like articles moving linearly,
- Fig. 1b: shows a section through the multi-layer stream of rod-like articles of Fig. 1a,
- Fig. 2a: shows a multi-layer stream of rod-like articles moving on a circular path,
- Fig. 2b: shows a section of the multi-layer stream of rod-like articles of Fig. 2a,
- Fig. 3: shows an example of a conveying line with a channel in the first embodiment;
- Fig. 4: shows a cross-section through the channel of Fig. 3,
- Fig. 5: shows the second embodiment of the channel,
- Fig. 6: shows a cross-section through the channel of Fig. 5.

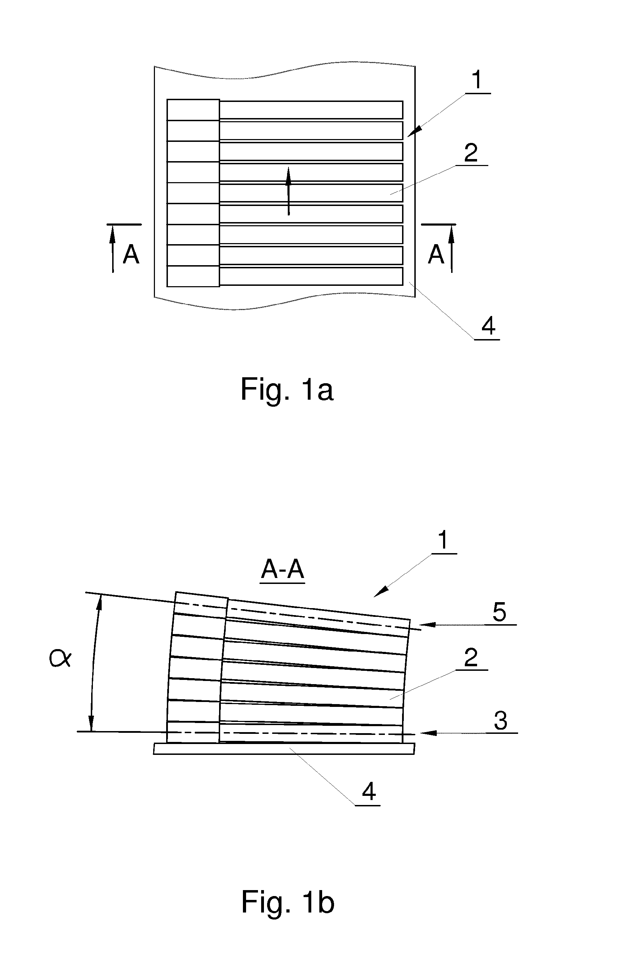

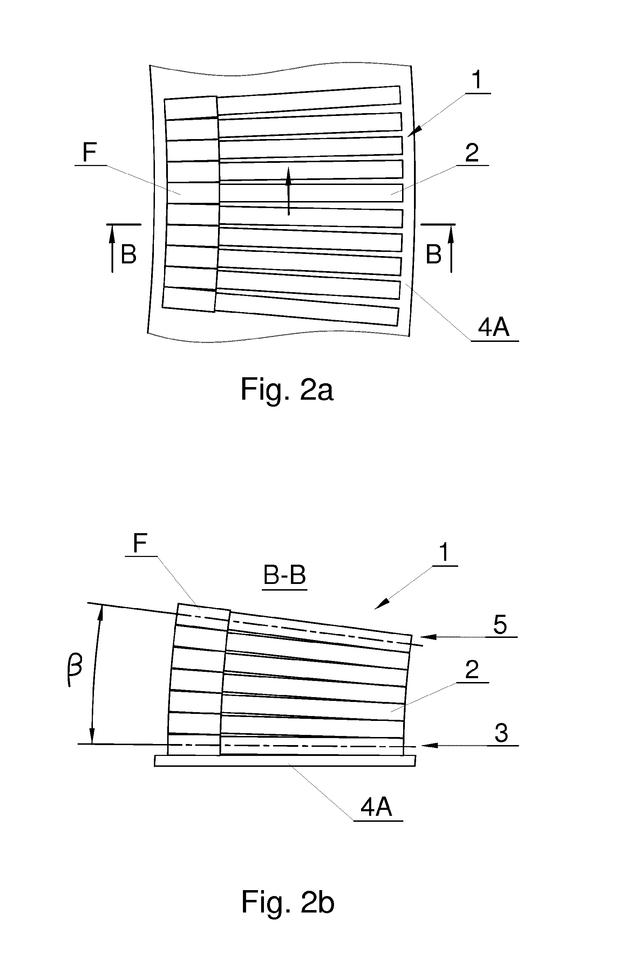

In the stream 1 shown in fig. 1a and 1b moving in a straight line, the rod-like articles 2, in this case the cigarettes, are conveyed in multiple layers. The lowermost layer 3 in the stream 1 shown in fig. 1b in a section A-A through the stream has a direct contact with a conveyor 4, whereas the uppermost layer 5 due to a non-uniform diameter of the articles 2 is inclined at an angle α to the lowermost layer 3. The problem of inclination of the uppermost layer 5 relative to the lowermost layer 3 also concerns conveyors where the articles move on a circular path as shown in fig. 2a and 2b. For filters F situated inside a circular conveyor 4A as in fig. 2a the angle of inclination β of the uppermost layer 5 relative to the lowermost level 3 will be greater than the angle α for articles moving in a straight line, for filters F situated outside the circular conveyor 4A the angle of inclination β will be less than the angle α for the articles 2 moving in a straight line.

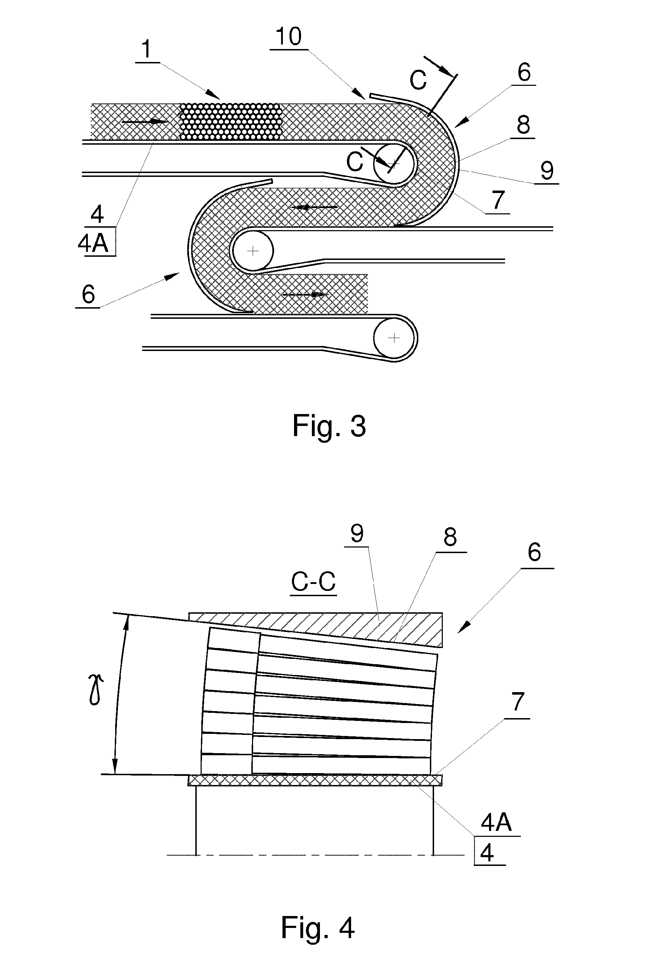

In the fragment of the conveying line shown in fig. 3 the flow of the stream 1 of rod-like articles among the successive conveyors is shown. The direction of flow on the successive conveyors has been indicated by arrows, whereas the conveyors may be embodied as rectilinear 4 or circular 4A conveyors. The channel 6 is used for receiving and guiding a multi-layer stream 1 and for delivering it onto the successive conveyor 4, 4A situated below. In this embodiment the channel 6 has an inside wall 7 created by a fragment of the conveyor 4 or 4A designed as a belt or chain conveyor, and an outside wall 8 having the form of a stationary arched guide 9. Fig. 4 shows a cross section C-C through the channel 6 of fig. 3. The wall 8 is inclined relative to the wall 7 at the angle γ which depends on the angles α, β of inclination of the uppermost layer relative to the lowermost layer in the inflowing stream 1. In other words, in order to obtain the flow of an article stream where during the movements among successive conveyors no uncontrolled movements of articles in the stream takes place, the angle γ of inclination of the wall channels 6 is selected depending on the angles α, β, thus depending on the diameters of conveyed articles, and precisely on the relationship of the filter portion diameter to the tobacco portion diameter, and in case of circular conveyors additionally on the radius of curvature of the conveyor.

During the operation of the conveying line, just before the inlet to the channel 6 a momentary accumulation of articles 2 may occur, which is why the channel 6 should be provided with an inlet 10 whose walls are also nonparallel to each other, similarly adjusted to the angles α, β as described above with regard to the channel.

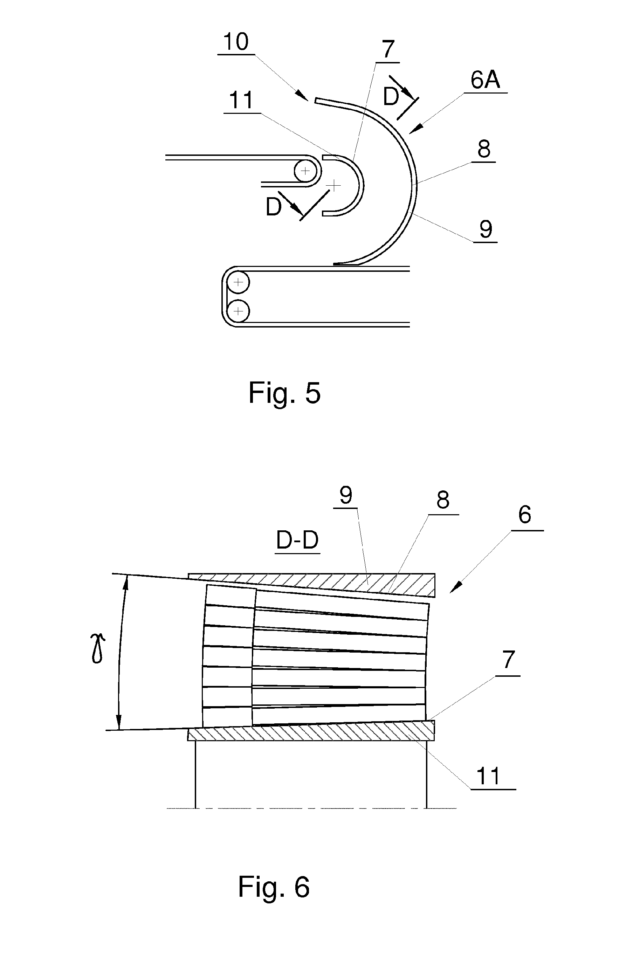

Fig. 5 shows a second embodiment of the invention where the inside wall 7 of the channel 6 formed on the stationary arched guide 11 and the outside wall 8 formed on the stationary arched guide 9 are used for guiding the stream of rod-like articles. The walls 7 and 8 may be inclined at the angle γ relative to each other, similar to fig. 4. Fig. 6 presents a section D-D through the channel of fig. 5 which shows the inclination of the wall 8 relative to the wall 7 also at the angle γ whereas both guides 9 and 11 have a cross section in the form of a wedge. In another possible embodiment of the invention the guide 9 may have the form of a flat member with a uniform thickness. Furthermore, the inclination of the walls 7 and 8 may be different along the length of the channel 6, for example in a situation when connected conveyors have different curvatures or are shifted relative to each other in the top view.

## Claims

1. A conveyor system comprising a channel for guiding a multi-layer stream of rod-like articles of the tobacco industry received from a conveyor of rod-like articles, whereas the lowermost and uppermost layers of rod-like articles in the stream are nonparallel to each other, whereas the channel is adjusted to guide rod-like articles among conveyors situated one above the other and has at least two arch-shaped, inside and outside, walls of the guides,
**characterised in that**
in a cross section the walls of the channel guides are nonparallel to each other and the angle (γ) between the inside walls of the guides of the conveying channel is adjusted depending on the angles (α, β) of inclination of the uppermost layer of rod-like articles (5) relative to the lowermost layer of rod-like articles (3) in the inflowing stream in order to maintain a stable shape of the multi-layer stream of rod-like articles.

2. A system according to claim 1 **characterized in that** the angle (γ) between the inside walls of the guides of the conveying channel is an angle in the range between 3 and 4 degrees, preferably 3.5 degrees.

3. A system according to claim 1 or 2 **characterized in that** the conveying channel is additionally provided with an inlet whose walls, guiding the article stream, are nonparallel to each other by an angle greater than the angle (γ).
